# EUROPEAN PATENT APPLICATION

(11) **EP 1 909 154 A2**
(43) Date of publication of application: **09.04.2008**
(21) Application number: 07115603.8
(22) Date of filing: 04.09.2007
(51) Int. Cl.: G05B 19/4155

(54) **Controller for machine tool**

(30) Priority: 06.10.2006 JP 2006275076
(71) Applicant: FANUC LTD, Minamitsuru-gun, Yamanashi 401-0597 (JP)
(72) Inventor: Ogata, Toshiyuki Fanuc Manshonharimomi, Minamitsuru-gun, Yamanashi 401-0511 (JP); Hiraga, Kaoru Fanuc Manshonharimomi, Minamitsuru-gun, Yamanashi 401-0511 (JP)
(74) Representative: Billington, Lawrence Emlyn

(57) **Abstract**

A processing program is constituted by a main program and sub-programs, and a plurality of processing programs are stored in a storage means. Only main programs are extracted from the storage means and displayed on a display device by a list. Extraction of only the main program is performed by determining whether a program to be detected has a specific code included in only the main program or whether the program to be detected has a specific code included in only a sub-program.

## Description

### BACKGROUND OF THE INVENTION

### 1. Field of the Invention

The present invention relates to a controller for controlling a machine tool and, more particularly, to searching for a processing program.

### 2. Description of Related Art

A controller such as a numerical controller for controlling a machine tool controls the machine tool on the basis of a processing program. An object to be processed is processed by the machine tool. The processing program includes a structure in which a processing sub-program is invoked by a processing main program to describe a processing path and a structure in which all processing paths are described in one processing main program without invoking a processing sub-program out.

When the processing program is created by using the processing sub-program, processing sub-programs of several types may be invoked by the processing main program two or more times or multiply. In particular, contents of processing using a latest machine tool become very complex. The structure of the processing program also becomes very complex such that processing sub-programs of several types are invoked by a processing main program two or more times or multiply. Furthermore, a storage means for the processing program has a capacitance which becomes considerably large with improvement of performance of a machine tool. The storage means is designed to store a large number of processing programs. In addition, the number of processing sub-programs becomes very large relative to the number of processing main programs, and it is natural that the number of processing sub-programs in the storage means which stores processing programs are many times the number of processing main programs.

When an operator performs processing or arrangement, the operator selects a target processing program from processing programs stored in a storage means and draws a processing shape on a screen of a display device of a controller to check the contents of the program. For this purpose, the operator must invoke a processing main program. However, it is a very difficult and cumbersome operation to extract the processing main program from the large number of processing programs stored in the storage means and to select a target processing main program from the extracted processing main programs.

In general, when a target processing program is to be selected from processing programs stored in a storage means, an operator operates a console panel for operating a machine or the like to input a processing program display command to a controller. At this time, the controller receives the processing program display command to display a list of processing programs stored in the storage means on the display device. When all the processing programs to be displayed cannot be displayed on the screen, the processing programs are displayed on a plurality of pages. In recent years, as described above, the number of processing programs to be stored in a storage means increases, as a result, the number of pages on which the processing programs are displayed by a list increases. For this reason, it is a difficult and cumbersome operation that a target processing main program is found out in the displayed list.

Since pieces of information can be added to processing programs as comments, respectively, the programs can be discriminated from each other depending on the information of the comments. However, when an operator neglects to add the comments or a long period of time has elapsed, the operator cannot recollect the contents of the processing programs. For this reason, the comments do not always play sufficient roles. Furthermore, individually reading comments which were added to enormous numbers of programs is an actual cumbersome operation. In case where a machine is used by a plurality of operators, the operation tends to be more increasingly confused.

Therefore, as a method of solving the problem, known is a processing program management apparatus for a profiling electric discharging machine (for example, see Japanese Patent Application Lid-open (JP-A) No. 2001-255916), in which photographs of products, information of the products, and the like are stored in a storage means in association with processing programs of the products, and a photograph is invoked by keyword searches of the information on the products to select a processing program, so that a target program can be easily found from among a large number of processing programs.

Furthermore, known is a numerical controller for a machine tool in which processing programs are stored in units of independent groups of a plurality of target types, thereby making it possible to easily select a processing program (for example, see Japanese Utility Model Application (JP-U) No. 3-93909).

As described above, it is increasingly difficult to find out a target processing program (processing main program) for processing and arrangement from enormous numbers of processing programs stored in a storage means in a controller for controlling a machine tool or an external storage means, with the result that the problem is enlarged as program is increased.

As described above, even though a processing main program and a processing sub-program are discriminated from each other based on information of comments, an operator may neglect to add the comments or cannot recollect the contents of the processing programs, thereby making it difficult to find a target processing main program.

As described in JP-A No. 2001-255916, in the method in which the photographs of products and information on the products are stored in the storage means in association with the processing programs, photograph data must be prepared, and an operation for associating the processing programs with various pieces of information must be performed. For this reason, many time-consuming operations are required to manage the processing programs in advance. When the operations are performed based on keyword searches, if an appropriate keyword cannot be recollected, a target processing program cannot be easily found out. As a whole, a target processing main program cannot be easily found out without any problem.

Furthermore, as described in JP-U No. 3-93909, in the method in which the processing programs are stored in units of groups, new management problems may occur in which an operator can not easily determine an appropriate group in which the target processing program is to be stored, or may forget a position at which the target processing program is stored. Furthermore, even though a target group can be determined, when the group is very large, the operation must return to the starting point, as a result, it becomes difficult to select a target processing program. Therefore, the method cannot easily find out a processing main program without any problem.

### SUMMARY OF THE INVENTION

The present invention relates to a controller for a machine tool which processes an object to be processed in accordance with a processing program. The controller comprises: processing program storage means which stores processing programs; processing main program extracting means which identifies a plurality of processing programs stored in the processing program storage means as processing main program or processing sub-program and extracts the identified processing main programs; and display means which displays a list of the processing main programs extracted by the processing main program extracting means.

The processing main program extracting means may extract a processing program having a code to make an instruction to end the processing program as a processing main program from the plurality of processing programs stored in the processing program storing means.

The processing main program extracting means may extract a processing program which does not have a code to make an instruction to return the processing program to a program position invoked by a invocation code as a processing main program from the plurality of processing programs stored in the processing program storage means.

The processing main program extracting means may extract a processing program which is not invoked by another processing program as a processing main program. When the plurality of processing programs stored in the processing program storage means are set such that a code to make instruction to end the program is regarded as a code to make instruction to return the program to a program position invoked by a invocation code, the processing main program extracting means may extract a processing program having a code to make an instruction to end the processing program as a processing main program no matter whether the processing program is invoked by another program or not. The processing main program extracting means may extract a processing program which has no specific instruction code and which is not invoked by another processing program as the processing main program. The controller may further comprise processing main program list storage means which stores a list of processing main programs extracted by the processing main program extracting means, wherein the display means displays a list of the processing main programs stored in the processing main program list storage means by a processing main program list display instruction, and the processing main program extracting means is caused to operate so as to update the processing main program list storage means when a processing program is additionally stored in the processing program storage means or when the processing program to be stored in the processing program storage means is updated.

According to the present invention, processing main programs are automatically extracted from enormous number of processing programs stored in the processing program storage means and displayed by a list, as a result, it is possible to provide a controller for a machine tool which can easily select a target processing main program without performing special management.

### BRIEF DESCRIPTION OF THE DRAWINGS

The forgoing and other objects and features of the present invention will be apparent from the following explanation of preferred embodiments of the invention with reference to the accompanying drawings, in which:
FIG. 1 is a schematic diagram of a controller which controls a machine tool according to an embodiment of the present invention;
FIG. 2A is an explanatory diagram of an example of a processing main program;
FIG. 2B is an explanatory diagram of an example of a processing sub-program;
FIGS. 3A and 3B are explanatory diagrams of an example of processing performed by a wire-cut electric discharge machine;
FIG. 4 shows an example of the processing program of the processing shown in FIG. 3A;
FIG. 5 shows an example of a processing program of the processing shown in FIG. 3B;
FIG. 6 shows an example of a virtual program performed when a setting item to effectively operate the processing program shown in FIG. 5 is set in "ON".
FIG. 7 is a flow chart showing a first example of a processing program display process executed by the controller according to the present invention.
FIG. 8 is a flow chart showing a second example of the processing program display process executed by the controller according to the present invention.

### DETAILED DESCRIPTION OF THE PREFERRED EMBODIMENTS

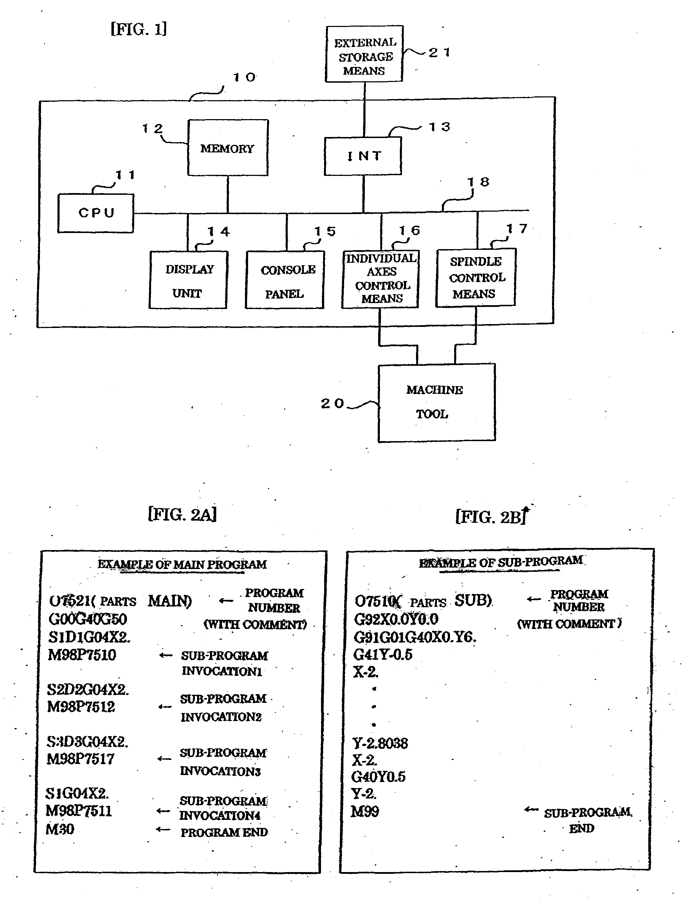

FIG. 1 is a schematic diagram of a controller for controlling a machine tool according to an embodiment of the present invention. The controller is a numerical controller. As schematically showing in FIG. 1, the numerical controller has the same configuration as a conventional controller for a machine tool except that software for extracting and displaying a processing main program (to be described later) is stored in a memory (storage means) and that a processing main program extracting/display function is provided.

A controller 10 includes a processor (CPU) 11, and a memory (storage means) 12, an interface 13, a display unit 14, a console panel 15 for operating a machine, individual axes control means 16 which control servo motors for individual axes of a machine tool 20, and a spindle control means 17 which controls a spindle motor of the machine tool 20, which are connected to the processor 11 through a bus 18.

The memory 12 is constituted by a ROM, a RAM, a nonvolatile memory, and the like. In the ROM, a system program which controls the system as a whole is stored. Various processing programs are stored in the nonvolatile memory. An external storage means 21 in which various processing programs or the like are stored is connected to the interface 13, so that the processing programs can be read by a processor.

On the display unit 14, the processing programs and processing main programs in the processing programs stored in the memory 12 (and the external storage means 21) in relation to the present invention are displayed on the basis of an instruction from a keyboard or the like arranged on the console panel 15. The individual axes control means 16 performs feedback control of position and speed on the basis of move instructions which the processor 11 sent to respective axes based on the processing programs, and of position and speed feedback signals from position/speed detectors (not shown) arranged on the servo motors, respectively, to drive the servo motors of the shafts and control the position and the speed. Furthermore, the spindle control means 17 controls the speed of the spindle on the basis of a spindle speed command sent from the processor 11.

A processing program required for processing or arrangement is selected from enormous numbers of processing programs stored in the memory 12 and the external storage means 21, and a processing shape or a processing locus is displayed on the screen of the display unit 14 to check the contents of the processing program. The processing program selected for this purpose (or selected for processing or arrangement) must be processing main programs. For this reason, in the present invention, from the processing programs stored in the memory 12 and the external storage means 21, the processing main programs are extracted, distinguished from processing sub-programs, and the processing main program is displayed on the display unit 14. In this manner, selection of processing main programs is made easy.

Therefore, a method of extracting processing main programs, distinguished from the processing sub-programs, will be described below. The processing programs are designed to be discriminated from other processing programs according to original program numbers or original file names. However, discrimination performed by the program numbers will be described as an example.

FIG. 2A shows an example of a processing main program, and FIG. 2B shows an example of a processing sub-program. The programs are added with program numbers "Oxxxx". In the example of the processing main program shown in FIG. 2A, "O7521" is a program number. In the example of the processing sub-program shown in FIG. 2B, "07510" is a program number.

In general, the processing main program and the processing sub-program have several structural differences.

For example, processing sub-programs are designed to be invoked by other processing programs. In the example of the processing main program shown in FIG. 2A, processing sub-programs "7510", "7512", "7517", and "7511" are invoked by an argument P of a processing sub-program invocation code "M98". A processing program is constituted by a processing main program and processing sub-programs to be invoked by other programs.

On the other hand, the processing main program shown in FIG. 2A is not invoked by another processing program by using the processing sub-program invocation code "M98". As the processing sub-program, another processing sub-program may be invoked by the processing sub-program invocation code "M98".

The processing main program and the processing sub-program generally have different end codes, respectively. The processing main program shown in FIG. 2A has a program end code "M30". The program end code "M30" means that an operation of the machine is ended in this stage.

On the other hand, the processing sub-program shown in FIG. 2B is ended with an end code "M99" of sub-program. The end code "M99" of sub-program means that the program returns to a program position invoked by a invocation code without stopping the operation of a machine.

Therefore, in general, searching for instruction codes of all the processing programs in the processing program storage device is performed to find out the differences, so that processing main programs and processing sub-programs can be distinctively extracted.

In order to discriminate processing main programs from processing sub-programs, there is a method which uses the fact that a program having a program end code "M30" is processing main program and a program having a processing sub-program end code "M99" is a processing sub-program. Therefore, in order to extract the processing main program by using the method, programs having the program end code "M30" may be extracted. Alternatively, a program which does not have a processing sub-program end code "M99" may be extracted so as to extract a processing main program.

However, the program end code "M30" may be set in the sub-program, too. For this reason, when processing main programs are extracted by the program end code "M30", processing sub-programs may be erroneously extracted as processing main program. Therefore, when processing programs having the program end code "M30" are estimated and extracted as processing main programs, accuracy of extracting processing main programs is deteriorated. However, the number of processing sub-programs in which the program end codes "M30" are set is very small. For this reason, even though such processing sub-programs are mixed with the processing main program and displayed by a list, a target processing main program can be selected without trouble.

Furthermore, processing main programs, as described above, are not invoked by other processing programs. For this reason, in consideration of this, a program which is not invoked by the processing sub-program invocation code "M98" may be extracted as processing main program. According to this method, processing main programs can be extracted at a higher accuracy.

However, in recent years, setting items related to processing programs are set to improve usability. According to the setting, for example, processing main programs can be handled as processing sub-programs. As an example, even though "M30" (program end) occurs during program invocation by the processing sub-program invocation code "M98", the "M30" may be regarded as the "M99" (processing sub-program end).

When the same processing shape as one processing shape processed by a processing program (processing main program) are processed two or more times, a processing main program which invokes the processing program for processing the processing shape as a sub-program to perform processing may be created.

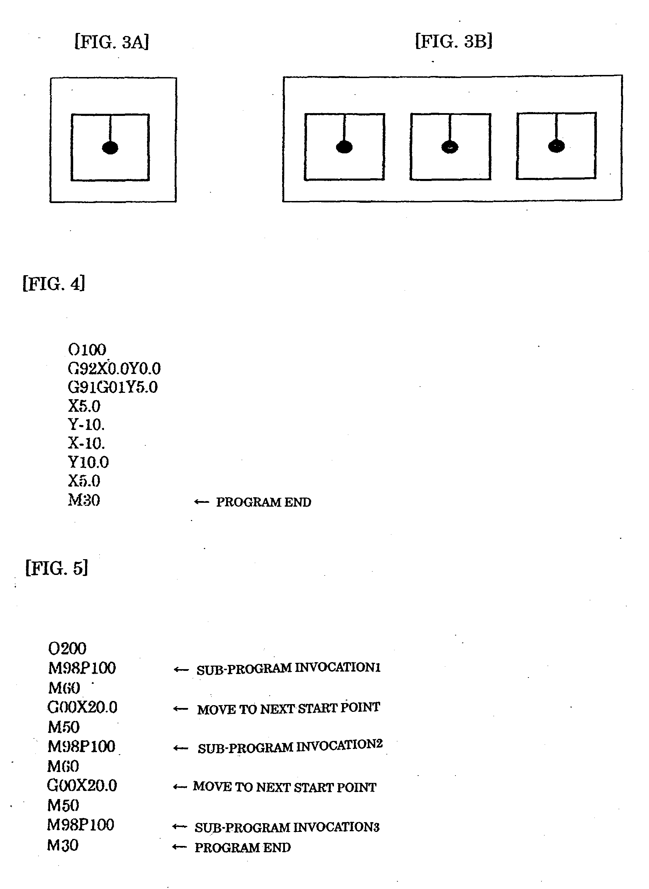

For example, in a controller for a wire-cut electric discharge machine, when wire-cut processing to form square hole as shown in FIG. 3A is performed, a processing program as shown in FIG. 4 is created. This processing program is to process the shape shown in FIG. 3A, completed by the program itself, and constitutes a processing main program.

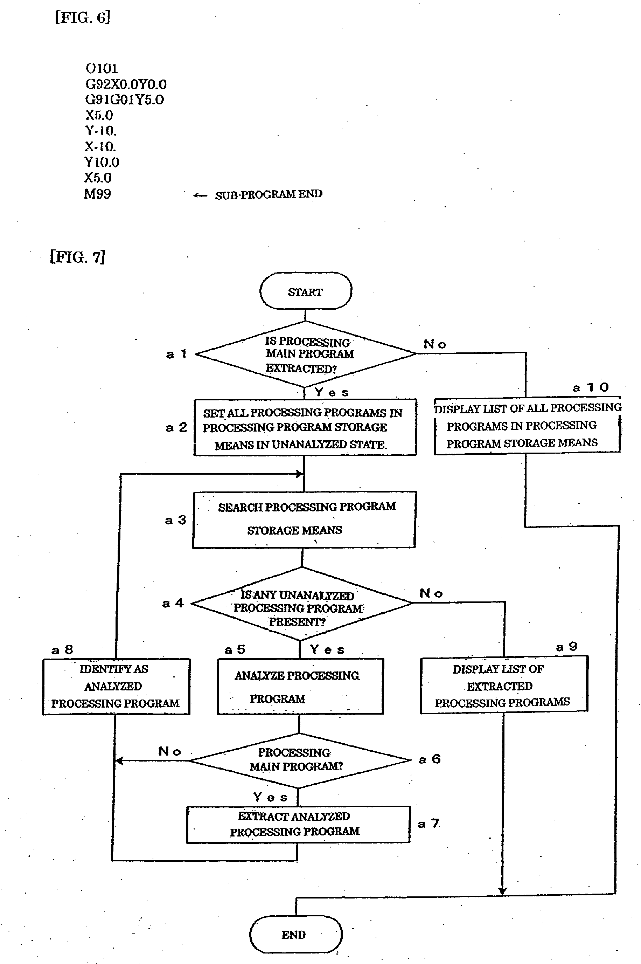

On the other hand, as shown in FIG. 3B, when three square holes as shown in FIG. 3A are formed, a processing program which invokes the program shown in FIG. 4 three times to perform processing is created to make it easy to create the program. An example of the program is shown in FIG. 5. In FIG. 5, reference symbol "M60" denotes a wire-cutting operation instruction, and reference symbol "M50" denotes an automatic wire-connecting instruction. However, even though the program "O100" shown in FIG. 4 is read out by the "M98", the program cannot be returned to the processing main program "O200" shown in FIG. 5, as the ending of the program is "M30", as a result, the processing cannot be completed. For this reason, a setting item which regards the program end code "M30" in the read program as the end code "M99" of the processing sub-program is set. If the setting of the item is "ON", "M30" in the program (FIG. 4) read by "M98" is handled as an instruction of "M98". As a result, if the setting is "ON", the program (FIG. 4) read by the instruction of "M98" is processed like a program (corresponding to a program in which the final row of the program in FIG. 4 is changed from "M30" to "M99") as shown in FIG. 6. In consequence, the program in FIG. 5 is executed to the last, and the processing for three holes is completed.

In this manner, if the setting of the item is "ON", a processing main program having "M30" is invoked by "M98", and "M30" in the program is regarded as "M99" to be handled as a sub-program. In this case, when the processing main program is regarded as a "program which is not invoked by "M98", the processing main program shown in FIG. 4 which perform the hole processing shown in FIG. 3A is not extracted as a processing main program.

Therefore, in the present invention, in case where an instruction is made such that the setting of the item is "ON" to handle "M30" in the program read by "M98" as "M99" when extracting the program which is not invoked by the processing sub-program invocation code "M98" as a processing main program, the program having "M30" read by "M98" is handled as the processing main program. In this manner, the processing main program is reliably extracted.

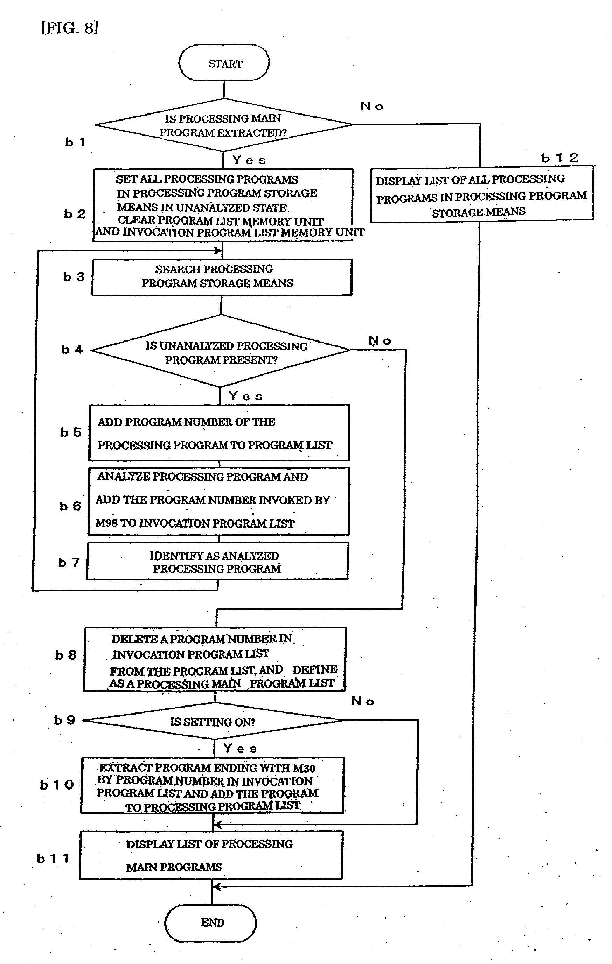

FIG. 7 is a flow chart showing a first example of a processing program display process executed by the controller according to the present invention.

In the first example of the displaying process, a processing main program is extracted by an instruction code included in the program. More specifically, the program having the program end code "M30" is extracted as the processing main program, or the program that does not has the processing sub-program end code "M99" is extracted as the processing main program.

An operator designates a storage means which stores a processing program of which list is to be displayed. Furthermore, the operator determines whether all processing programs should be displayed by a list or only processing main programs should be displayed by a list, and inputs a corresponding program list display instruction from the console panel 15. The processing program to be displayed by a list may be stored in any one of, for example, the memory 12 of the controller 10, the external storage means 21 connected to the interface 13, and the internal storage means 12 of the controller 10. A storage means which stores a target processing program is designated by selection. The designated storage means is invoked a processing program storage means. Furthermore, it is decided by inputting a program display instruction whether a list of all the processing programs is displayed or a list of all the processing main programs is displayed.

When the display instruction is input, the processor 11 determines whether or not the display instruction is an extraction display instruction of processing main programs (step a1). When the display instruction is not the extraction display instruction of processing main programs, a list of the processing programs stored in the set processing program storage means (memory 12 and/or external storage means 21) is displayed on the display screen of the display unit 14 (step a10), and the display process is ended.

With the list display information, an operator can understand the processing contents of the processing programs. For example, the list display information is constituted by data such as a program number, a comment, a registration date, an updating date, and the number of characters. The data is expressed by the form of a list.

In the recent processing program, as shown in FIG. 2, the information is often constituted by a processing main program and a large number of processing sub-programs invoked by the processing main program. For this reason, lists of all the processing programs are long displayed, and displayed on the display screen of the display unit 14 across several pages.

On the other hand, when the display instruction is extraction display instruction of processing main programs, all the processing programs stored in the designated processing program storage means (memory 12 and/or external storage means 21) are set in unanalyzed states (step a2). The processing program storage means is searched (step a3) to determine whether an unanalyzed processing program is present or not (step a4) . When any unanalyzed processing program is present, the processing program is analyzed to determine whether the analyzed processing program is a processing main program or not (steps a5 and a6). In the case where whether the analyzed processing program is a processing main program or not is determined by checking whether the processing program includes the program end code "M30" or not, if the analyzed processing program includes the code "M30", then the processing program is regarded as the processing main program and extracted (step a7). Alternatively, in the case where whether the analyzed processing program is a processing main program or not is determined by checking whether the processing program includes the processing sub-program end code "M99" or not, if the analyzed processing program does not include the code "M99", then the processing program is regarded as the processing main program and extracted (step a7).

The processing program thus analyzed in step a5 is identified as an analyzed processing program (step a8), the processing proceeds to step a3 to repeatedly execute the processes subsequent to step a3, and the processing main program is extracted.

On the other hand, when it is determined that an unanalyzed processing program is not left in the processing program storage means (determined as No in step a4), all of the lists of the processing main programs extracted up to now is displayed on the screen of the display unit 14 (step a9). The list display data is the same as information displayed by a list in step a10, and is information that makes it possible to understand the processing contents of the processing program. For example, the list display data is constituted by data such as a program number, a comment, a registration date, an updating data, the number of characters, of the processing main program, and displays these data in the form of a list.

A processing program is constituted by a processing main program and processing sub-programs. As shown in FIG. 2A, since a plurality of processing sub-programs are frequently read out by one processing main program, the number of processing sub-programs is large, but the number of processing main programs is small, as compared with the total number of programs. Therefore, the number of processing main programs displayed by a list in step a9 is considerably smaller than the total number of processing programs displayed in step a10. As a result, a list of the processing main programs displayed in step a9 is short. For example, since the list is displayed on one page or a small number of pages, a target processing main program can be easily selected.

FIG. 8 is a flow chart showing a second embodiment of a processing program display process executed by the controller according to the present invention.

In the second example of the display process, a processing program which is not invoked by the processing sub-program invocation code "M98" is extracted as a processing main program. Also in this example, as the processing program storage means, the memory 12 of the controller 10, the external storage means 21 connected to the interface 13, or both of them are designated. A display of all the processing programs or a display of only the processing main program is selected to input a program list display command from the console panel 15.

When the display instruction is input, the processor 11 determines whether the display command is the extraction display instruction of processing main programs or not (step b1). When the display instruction is not the extraction display instruction of processing main programs, a list of all the processing programs stored in the set processing program storage means (memory 12 and/or external storage means 21) is displayed on the display screen of the display unit 14 (step b10), and the display process is ended. This point process is the same as that in the first embodiment.

When the display instruction is extraction display instruction of processing main programs, all the processing programs stored in the designated processing program storage means (memory 12 and/or external storage means 21) are set in unanalyzed states, and a program list memory unit and an invocation program list memory unit are cleared (step b2). The processing program storage means is searched (step b3) to determine whether an unanalyzed processing program is present in the processing program storage means (step b4). When an unanalyzed processing program is present in the processing program storage means, the program number of the processing program is added to the program list of the program list memory unit and is stored (step b5). The processing program is analyzed. When the processing program includes the processing sub-program invocation code "M98", a program number invoked by the code "M98" is invoked, and the invoked program number is added to the invocation program list of the program list memory unit and is stored (step b6). The processing program thus analyzed in step b6 is identified as an analyzed processing program (step b7), and the processing returns to step b3. Subsequently, processes in step b3 to b7 are repeatedly executed, and a program list and an invoked program list are created.

When it is determined that an unanalyzed processing program is not left in the processing program storage means (step be, the result of determination "No"), a program number to be stored in the invocation program list memory unit is deleted from the program numbers stored in the program list memory unit, and only a processing program number which is not invoked is left. The processing program number left and stored in the program list memory unit is defined as a processing main program list (step b8).

It is determined whether a setting of an item which instructs "M30" in the program read out with the code "M98" to be handled as "M99" is "ON" or not (step b9) . When the setting is not "ON", a list of the processing main program obtained in step b8 is displayed on the screen of the display unit 14 (step b11). On the other hand, when the setting is "ON", it is analyzed whether "M30" is present in the program of the program number in the invocation program list. When the "M30" is present, the program number is added to the processing main program list created in step b8 as a processing main program (step b10) . Thereafter, a list of the processing main programs is displayed on the screen of the display unit 14.

Since processing main programs can be easily recognized, an unnecessary processing program can be easily deleted from the processing program storage means at a working site. However, since processing sub-programs are invoked by a processing main program, a processing sub-program which should be deleted tends to be forgotten to be deleted. In addition, since some sub-programs are invoked by a processing program except for the processing program to be deleted, the sub-programs may not be easily deleted. For this reason, even though a processing main program is deleted, processing sub-programs may remain in the processing program storage means without being deleted. In this case, such the processing sub-programs are not invoked by another program, the processing sub-programs may be disadvantageously extracted as a processing main program.

Therefore, for solving this problem, a process of determining whether or not the processing main programs obtained in step b8 in FIG. 8 include processing main program having the end code "M99" of processing sub-program so as to delete processing main programs having the code "M99" may be added. With this process, the processing sub-programs which remains to be deleted are prevented from being mixed with main program list, thereby allowing to create an accurate processing main program list. The number of each of the processing sub-programs which remain to be deleted, which are determined at this time, is displayed on the display unit 14 to urge an operator to delete the processing sub-program, so that a storable capacity of the processing program storage means may be increased.

In each of the above embodiments, when a list of processing main programs is displayed, the process in FIG. 7 or 8 is performed to analyze processing programs stored in the processing program storage means so as to extract processing main programs, thereby displaying the list of the extracted processing main programs. However, once the processing main program list is created, the processing main program list is stored. When a display instruction is input, the stored processing main program list may be displayed.

When a new processing program is added to the processing program storage means, when an unnecessary processing program is deleted, or when an updating process for the processing program is carried out, the processes in steps a2 to a8 in FIG. 7 or the processes in steps b2 to b10 in FIG. 8 may be automatically executed at the end of storage of the processing program or the end of the processing program updating process, so that a processing main program list may be created, updated, and stored.

When the processing main program list is created and updated, a list of all processing programs displayed in step a10 in FIG. 7 and step b12 in FIG. 8 may be created, updated, and stored at the same time. Subsequently, the stored list of all the processing programs may be displayed.

## Claims

1. A controller for a machine tool which processes an object to be processed in accordance with a processing program, comprising:
processing program storage means which stores processing programs;
processing main program extracting means which identifies a plurality of processing programs stored in the processing program storage means as processing main program or processing sub-program and extracts the identified processing main programs; and
display means which displays a list of the processing main programs extracted by the processing main program extracting means.

2. The controller for a machine tool according to claim 1, wherein
the processing main program extracting means extracts a processing program having a code to make an instruction to end the processing program as a processing main program from the plurality of processing programs stored in the processing program storing means.

3. The controller for a machine tool according to claim 1, wherein
the processing main program extracting means extracts a processing program which does not have a code to make an instruction to return the processing program to a program position invoked by a invocation code as a processing main program from the plurality of processing programs stored in the processing program storage means.

4. The controller for a machine tool according to claim 1, wherein
the processing main program extracting means extracts a processing program which is not invoked by another processing program as a processing main program.

5. The controller for a machine tool according to claim 4, wherein
when the plurality of processing programs stored in the processing program storage means are set such that a code to make instruction to end the program is regarded as a code to make instruction to return the program to a program position invoked by a invocation code, the processing main program extracting means extracts a processing program having a code to make an instruction to end the processing program as a processing main program no matter whether the processing program is invoked by another program or not.

6. The controller for a machine tool according to claim 4, wherein
the processing main program extracting means extracts a processing program which has no specific instruction code and which is not invoked by another processing program as the processing main program.

7. The controller for a machine tool according to claim 1 further comprising:
processing main program list storage means which stores a list of processing main programs extracted by the processing main program extracting means, wherein
the display means displays a list of the processing main programs stored in the processing main program list storage means by a processing main program list display instruction, and
the processing main program extracting means is caused to operate so as to update the processing main program list storage means when a processing program is additionally stored in the processing program storage means or when the processing program to be stored in the processing program storage means is updated.
